**Europäisches Patentamt**

**European Patent Office**

**Office européen des brevets**

(19)

(11) Publication number: **0 218 589**
**B1**

# EUROPEAN PATENT SPECIFICATION

(12)

(45) Date of publication of patent specification: **14.02.90**

(51) Int. Cl.⁵: **A 61 C 13/20**

(21) Application number: **85903358.1**

(22) Date of filing: **20.06.85**

(86) International application number:
**PCT/IT85/00012**

(87) International publication number:
**WO 86/00217 16.01.86 Gazette 86/02**

(54) **A PRECISION ELECTRIC WELDING DEVICE FOR WELDING OPERATIONS IN THE DENTAL OR ORTHOPAEDIC FIELD OR FOR OTHER SURGICAL APPLICATIONS.**

(30) Priority: **20.06.84 IT 4842684**
**28.08.84 IT 4876784**

(43) Date of publication of application:
**22.04.87 Bulletin 87/17**

(45) Publication of the grant of the patent:
**14.02.90 Bulletin 90/07**

(84) Designated Contracting States:
**AT BE FR GB LU NL SE**

(56) References cited:
**DE-A-3 327 882**
**FR-A-2 177 047**
**GB-A-1 122 481**
**US-A-3 790 738**

(73) Proprietor: **TITANWELD N.V.**
**P.O. Box 83**
**Bonaire (AN)**

(72) Inventor: **HRUSKA, Arturo**
**Via G. Carducci 10**
**I-00187 Rome (IT)**

(74) Representative: **de Simone, Domenico et al**
**Ing. Barzanò & Zanardo Roma S.p.A. Via**
**Piemonte 26**
**I-00187 Roma (IT)**

Courier Press, Leamington Spa, England.

EP 0 218 589 B1

## Description

The present invention relates to a precision electric welding device for welding dental crowns and bridges in the mouth with high precision, said dental crowns and bridges being made up of dentally suitable metals, especially of titanium and of titanium alloys, for welding operation in the orthopaedic field or for other surgical applications. More particularly, the present invention relates to a device of the kind that is made up a capacitive discharge electronic welding machine which is fed by an accumulator or storage battery, said welding machine being also provided with storage devices and programs relating to the welding operations in situ and giving a reliably high reproducibility, as well as of precision electric welding gun, which shows structural and functional features that allow an optimal sensitivity in the grip of the parts to be welded, and optionally also the possibility of previous adjustment of pressure exerted on said parts, as well as of rapid replacement of said gun with another similar gun or a gun provided with differently shaped electrodes capable of satisfying different welding needs.

As is well known, the welding operations in the surgical field, and in particular in the mouth have been carried out up to the present time by having recourse to electric welding machines such as that disclosed and illustrated in the Italian patent 957.322 (Gaetano Emanuele Spinnato), such machines operating on alternate current and being thus of the kind that can be supplied by the network voltage only and which can be manually adapted each time to the specific welding problem, with a previous check of the reproducibility possibilities by means of model experimentation, such preliminary check being required because of the possible changes in the voltage and of differences in the thickness of the materials to be welded as it is impossible to adjust the pressure of the welding gun employed with such welding machines.

Thus it is obviously evident that there is a need for a device for carrying out electric welding operations in the mouth, said device being of the type which can be supplied by an accumulator or storage battery so as to be independent of any changes or oscillations in the feeding voltage, and provided with electronic storage devices which increase the functional level of said welding device so as to allow an exact previous determination of the welding operation sequences.

Moreover, the electrode-holder guns presently commercially available, and employed with the above welding device show a number of drawbacks that place a limit to their exploitation.

In particular, in the electrode-holder gun which is the object of the Italian patent No. 957.321 (Spinnato), a helical spring system is provided that forms the cental fulcrum of the two arms of said gun, the tips of which, elastically engaging with the arms towards the ends of the same, act so as to close the tips of the gun which can be opened only exerting a force on the handles.

The abovesaid Italian patents have been conglobated in FR—A—2.177.047.

It is evident that such structure does not allow a good sensitivity when gripping the parts to be welded for the needs of the particular application.

Moreover, said gun is integrally connected to the electrical conductors of the feeder line so that the gun can not be replaced with another one, either for its sterilization, or for its substitution with a similar one but bearing electrodes capable of satisfying different welding requirements.

The device according to the present invention satisfies such requirements, said device being in particular free from any problem given by voltage oscillations as well as from any risks for the operator as are given by insulation losses, because it is supplied by a direct current source, this kind of supply unit being made possible as a result of the use of electronic components.

Moreover, the introduction of memory or storage means in which the cycles and the energies are stored to be applied as a function of changes in the materials, in the thicknesses and in the indications of the electric welding gun preloads, with the possibility of displaying and printing the full operation, completes the whole amount of necessary characteristics so as to eliminate the basic drawbacks of the prior art referred to above.

Furthermore, the gun of the device according to the present invention, the structure of which is in the form of a positive lever, allows the user an optimal welding sensitivity.

A further object of the present invention is that of supplying a device comprising an electric welding gun provided with a system for adjusting the pressure on the two parts to be welded, said system permitting to exert the desired constant pre-load during welding on the electrodes as a result of the presence of a leaf spring.

Moreover, the device of the present invention may comprise an electric welding gun which is provided with a rapid engagement of the cables from the welding machine so that said gun can be easily replaced.

A further object of the present invention is that of providing the possibility of having the prongs of said gun, on which the electrodes are provided, at a slope with respect to the main plane of said gun, said slope being suitable for the welding requirements as said electrodes are replaceable.

Advantageously the device according to the present invention is suitable for carrying out welding operations in the mouth with any dentally compatible metal, especially with titanium or titanium alloys for making bridges through the welding of preformed crowns provided with tabs such as those disclosed in the Italian patent application 48426A/84 (HRUSKA S.r.l.) which are the object of said application, by using an interdental precision electric welding gun.

Thus the present invention is a precision electric welding device for welding operations in the dental or orthopaedic field or for other surgical applications, comprising interdental precision welding gun means in the form of two layers pivotally connected in the form of scissors with the possibility of adjusting the pressure on the elements to be welded, and a capacitive discharge electronic welding machine including timing means and control board means characterized in that the following means are provided:

— accumulator or storage battery supply means;

— electronic charge regulation and voltage conversion unit;

— group of condensers;

— electronic switching means connected to said welding gun;

— programming and data storage means for controlling the charge which is necessary for said group of electronic condensers;

— control logic and timing means, and

— the control board means being connected with said programming and data storage means as well as with said control logic and timing means, wherein a direct current is supplied by said battery means to said charge regulation and voltage conversion unit connected, at the input, to said control logic and timing means and to said programming and data storage means and, at the output, to said group of condensers, to set forth the power that is necessary for the welding operation with said welding gun means connected through said switching means controlled by connection with said control logic and timing means, the desired program being selected on the control board.

In the preferred embodiments of the present invention, integrated analog switches as well as electromechanical switches are employed as electronic switching means, digital storage system (RAM, ROM, EAROM, etc.) are employed as memory or storage means, whereas digital/analog and analog/digital converters or micro- and mini-processors are employed as programming means, and high frequency converters of the switch mode power supply are employed as regulating and charge conversion means, such converters giving a high operative yield.

It is to be observed that the device according to the present invention can be operated in a semiautomatic way with manual pre-programming of the sequences (tests with materials and thicknesses) with storage also of the new data into the "library" of the electric welding machine that already contains all the welding operation sequences experimented.

The instruction programs are preferably written in BASIC, ASSEMBLER, FORTRAN, PASCAL, etc.

According to the preferred embodiment of the present invention said welding gun means comprise two conductive lever means each defining a straight handle portion at one end thereof, a curved portion adjacent said straight handle portion and leading to an electrically insulating fulcrum at which said levers cross, and beyond said fulcrum at the other end of each lever a welding tip the distance from the welding tip of each lever to the fulcrum being less than half the total length of each lever, replaceable electrode means provided on the tips of said lever means, high precision adjusting means placed between the handle portions of said lever means, one of said lever means including a leaf spring, to give to said one lever means some flexibility and provided between said adjusting means and said fulcrum device, said leaf spring being coated with flexible cord conductive means such as to restore the electrical conductivity section of the arm of said one of said lever means, and means for the rapid engagement of the cables from the welding machine.

Moreover, according to the invention, said lever means and said leaf spring are advantageously made up of a Cu—Be alloy or of a similar one, said alloy being surface treated with a chromium plating thickening procedure allowing to obtain a suitable equilibrium between the modulus of elasticity and the mechanical strength.

Furthermore, said gun may be surface treated with a coating suited to withstand the sterilization in an autoclave.

Moreover, according to the present invention, said flexible cord conductor means provided around said leaf spring may be embodied with flexible copper.

According to a preferred embodiment of the invention, said electric welding gun, which in the specific instance is for use in the orthopaedic or a similar field, carries the two electrode-holder tips of said two lever means at a slope of any angle between 0 and 360° with respect to the main plane of said gun, according to the particular welding requirements.

In a particularly preferred embodiment of this invention, said electric welding gun, for use in the dental field for welding operations within the mouth, carries the two tips at a slope of an angle between 90° and 120° with respect to the horizontal plane of said gun.

Moreover, according to this invention, said electrodes are preferably made up of elconite.

In a further embodiment according to the present invention, said high precision adjusting means are provided at any position along the straight handle section of said levers between said means for the rapid engagement of the cables and the zone where said lever means bend to cross in said fulcrum device.

Still further according to the invention, said high precision adjusting means comprise a threaded rod on which a load adjusting disk is provided, an insulating body being also provided on the opposite side with respect to said disk in order to prevent the electric current from passing direct through two such arms.

Finally, in the electric welding gun means according to this invention, said electrode means can be replaced by metallurgical processes as for instance by brazing or similar techniques, or by mechanical procedures such as screwing, by fastening, by rapid engagement, etc.

The present invention will be described in the following with particular reference to a specific and preferred embodiment illustrated in the enclosed drawings, wherein:

Figure 1 shows a block diagram of the electric welding device according to the present invention,

Figure 2 shows a scheme of the operative circuit of the device of Figure 1,

Figures 2a', 2a'', 2a''' and 2b show the details in two distinct fields of the characteristics of the components of the scheme shown in Figure 2.

Figure 3 shows a perspective view of an embodiment of the electric welding gun according to the present; and

Figure 4 shows another embodiment of the gun according to the present invention.

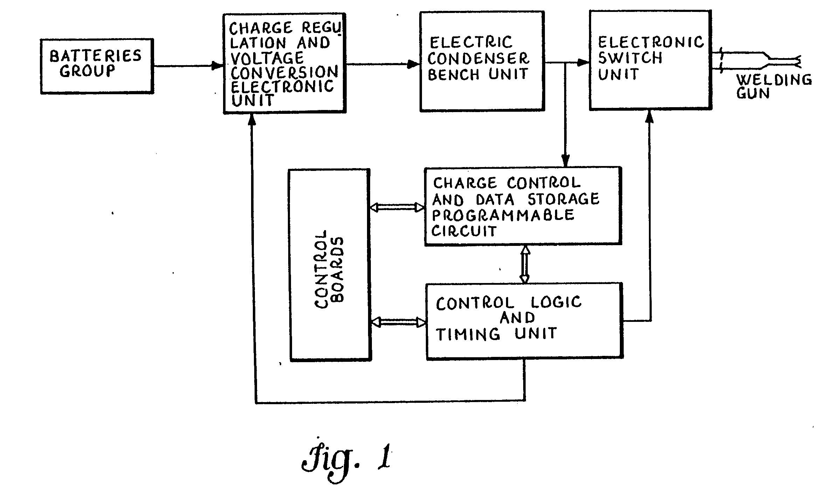

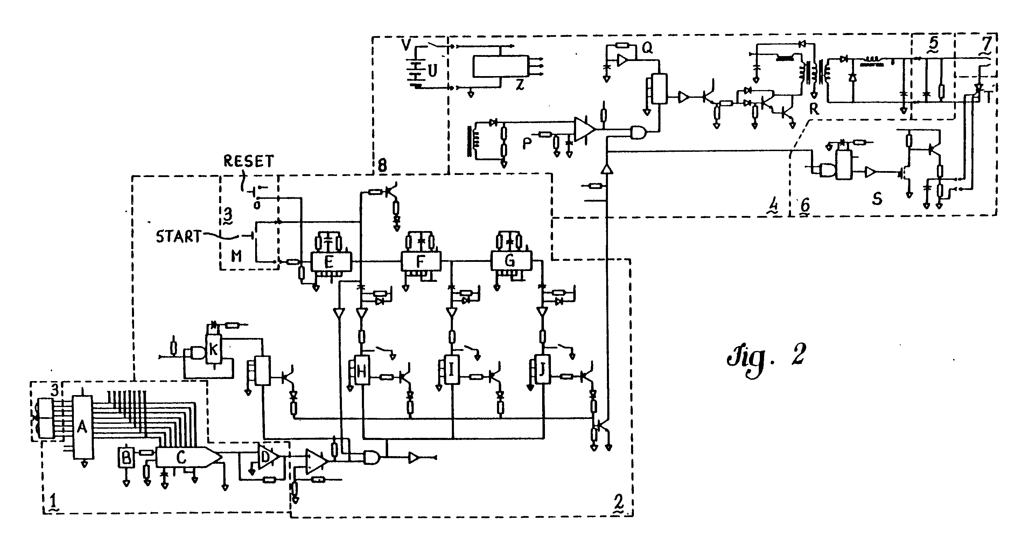

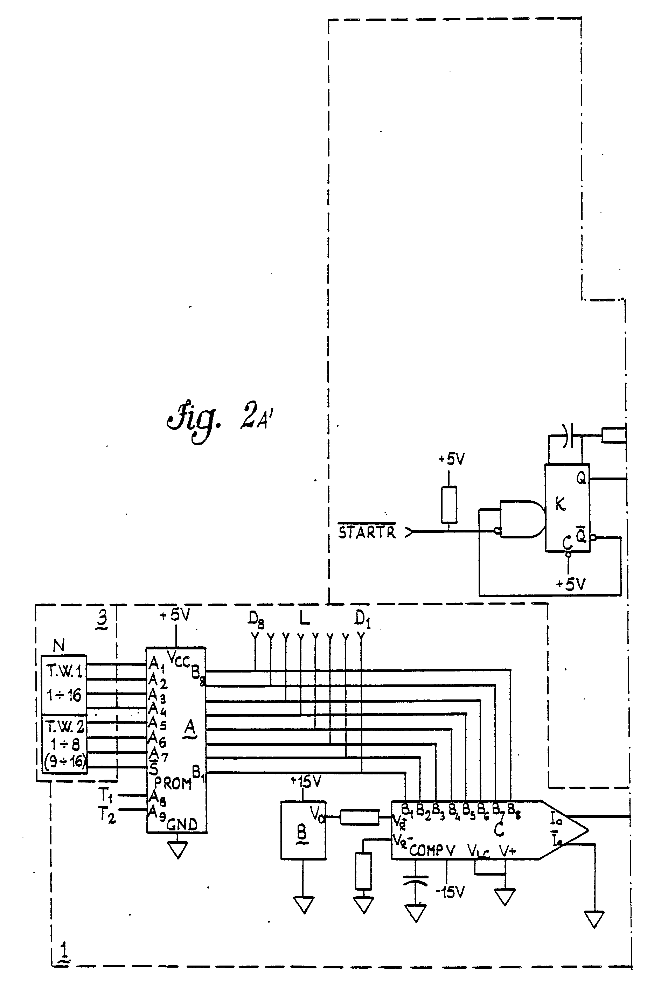

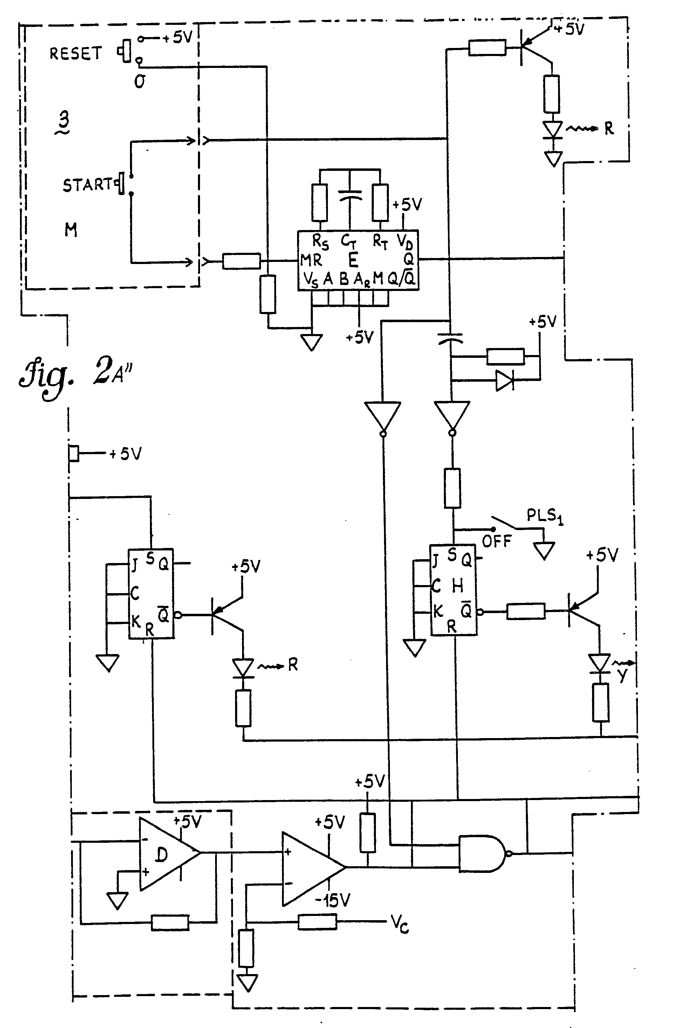

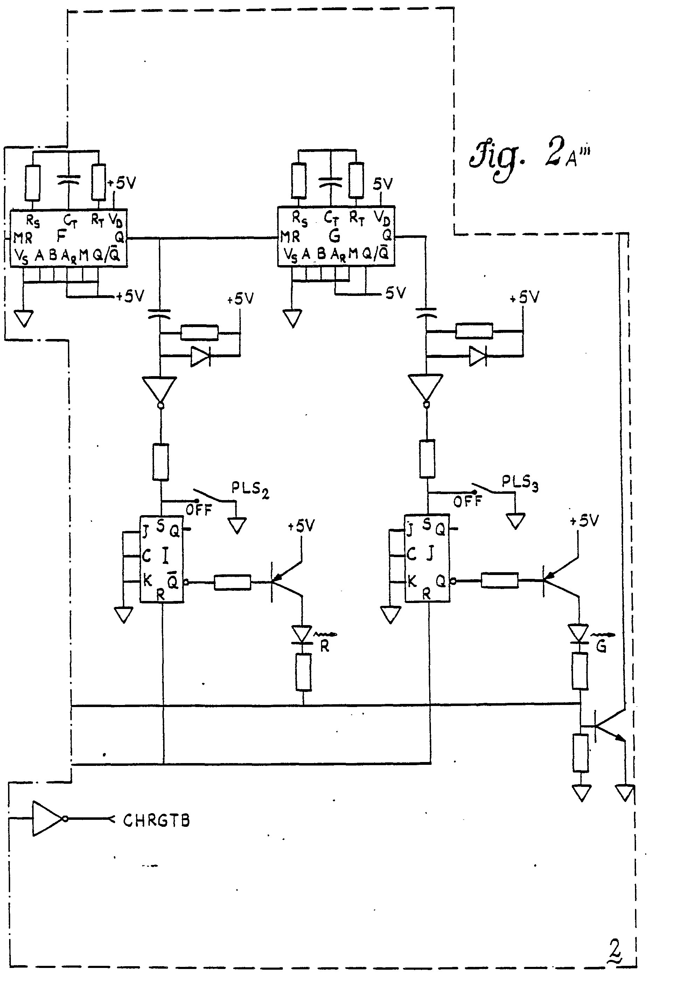

More particularly, the general scheme can be observed in Figure 1 of the device according to the present invention, wherein a direct current is supplied by the battery group to a regulation and charge control unit connected at the input to charge control and data storage programmed circuits, and to a control logic and timing unit, and at the output, to an electric condenser bench unit for the selection of the power necessary for the electric welding operations with welding gun means inserted through an electronic switch unit controlled by connection to the control logic and timing unit, the welding program being selected on a control board.

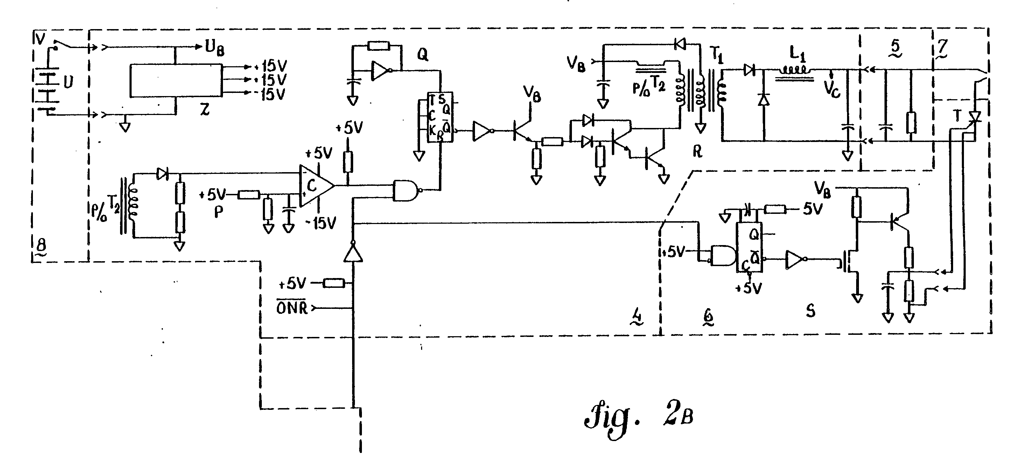

In Figure 2 the details are shown of the circuit diagram of a preferred embodiment of the invention, wherein numbers 1—8 point out the base units, and the capital letters point out the single components.

In a more specific way, number 1 points out, inside a sector indicated with a broken line the programming and data storage unit wherein the reference letter A points out the program storage circuit, B, C, D and L point out respectively an electric reference generator, a digital/analog converter, an amplifier and an interface-computer. Number 2 shows in a similar way the control logic and timing unit wherein E, F and G point out respectively a first, a second and a third timing device, whereas H, I and J point out respectively a first, a second, and a third charge control circuit, and K points out a charge control circuit from an outside computer.

The control board unit 3 comprises a cycle excitation control unit M, a group of frequency selectors N, and an emergency system 0 for the interruption of the cycle.

Number 4 shows the charge converter circuit wherein P, Q, R and Z respectively represent a current limiter, a converters control unit, a "forward" converter and a supply unit for the ancillary equipment.

Number 5 points out a bench of converters.

Number 6 points out the electronic switching unit in which S is the electronic switch pilot circuit and T is the electronic switch.

Moreover, number 7 illustrates the electric welding gun, whereas number 8 shows the accumulator or storage battery supply group, wherein U points out a system of rechargeable batteries and V a main protected switch.

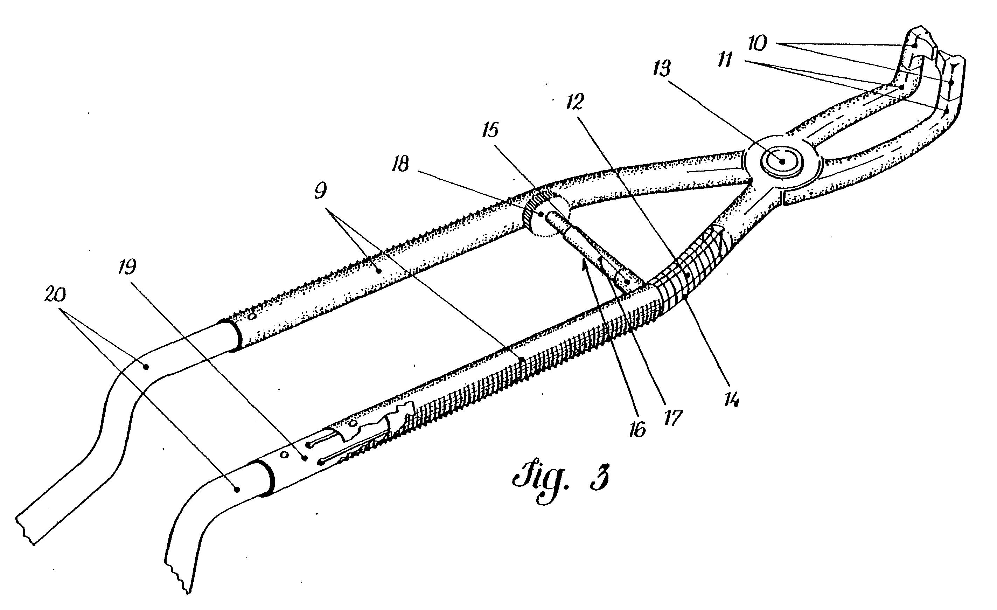

In Figure 3, the arms or levers of the electric welding gun according to this invention are pointed out by the number 9. Said levers 9 are made up of a Cu—Be alloy that is surface-treated by a thickening chromium plating process, while the gun is, in its turn, surface treated in order to stand to the necessary sterilization operations.

The employment of such alloy gives the welding gun a high electrical conductivity as well as a suitable mechanical strength, so that an optimal compromise is reached between the modulus of elasticity and the mechanical strength.

The electrodes, which are pointed out in the figure by number 10 are made up of elconite and are supported at the tips 11 of the welding gun levers, these last being at about 90° slope with respect to the horizontal plane of the welding gun, so that such welding gun is particularly suitable for welding operations within the mouth.

The spring 12 is provided on one of the two levers 9, at a point where said levers being to converge so as to cross at the fulcrum point 13 which is opportunely electrically insulated. A flexible copper lining 14 is provided around said leaf spring 12, such spring being also made up of said Cu—Be alloy, said copper lining restoring the original section of the lever 9 so as to keep the electrical conductivity conditions unaltered.

Number 15 points out the device for insulating the pre-load adjusting device 16, said device comprising a threaded rod 17 and a disk 18 for precision adjustment which can be operated by the user with the thumb of the hand that holds the welding gun.

By means of said precision adjusting device 16 it is possible to exert the desired constant pre-loading during the welding operation, as a result of the presence of the leaf spring 12.

The rapid engagement device 19 is provided at the end opposite to the lever tips 11. By means of said device 19, the cables 20 of the welding machine (not shown) can be rapidly disconnected so as to allow the rapid replacement of a welding gun of a given shape, previously supplied with predetermined electrodes, with another welding gun of similar features but of a different shape both as regards the electrodes and the supports themselves, which is more suitable for a given kind of welding operation, or with another welding gun which is equal to the previous one which can be sterilized in the meantime.

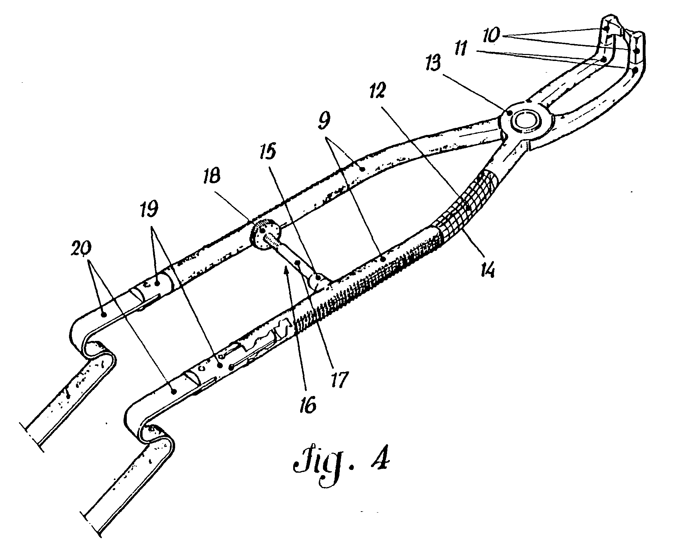

As shown in Figure 4, the pre-load adjusting device 16 can be provided indifferently at a position between the straight arms of said levers 9 which is more remote from the tips 11.

Claims

1. A precision electric welding device for welding operations in the dental or orthopaedic field or for other surgical applications, comprising interdental precision welding gun means (7) in the form of two levers pivotally connected in the form of scissors with the possibility of adjusting the pressure on the elements to be welded, and a capacitive discharge electronic welding machine including timing means and control board means characterized in that the following means are provided:

—accumulator or storage battery supply means (8);

—electronic charge regulation and voltage conversion unit (4);

—group of condensers (5);

—electronic switching means (6) connected to said welding gun;

—programming and data storage means (1) for controlling the charge which is necessary for said group of electronic condensers;

—control logic and timing means (2), and

—the control board means (3) being connected with said programming and data storage means (1) as well as with said control logic and timing means (2), wherein a direct current is supplied by said battery means (8) to said charge regulation and voltage conversion unit (4) connected, at the input, to said control logic and timing means (2) and to said programming and data storage means (1) and, at the output, to said group of condensers (5), to set forth the power that is necessary for welding operation with said welding gun means (7) connected through said switching means (6) controlled by connection with said control logic and timing means (2), the desired program being selected on the control board.

2. An electric welding device according to claim 1, characterized in that it comprises high frequency converters of the switch type (known as Switch Mode Power Supply) as a charge regulation and voltage conversion unit.

3. An electric welding device according to claim 1, characterized in that it comprises a digital data storage system (1) (RAM, ROM, EAROM, etc.) as data storage means and an analog/digital converter as programming means.

4. An electric welding device according to claim 1, characterized in that it comprises electromechanical and analog integrated switches as electronic switching means.

5. A precision electric welding device according to one of the preceding claims, characterized in that said welding gun means (7) comprise two conductive lever means (9) each defining a straight handle portion at one end thereof, a curved portion adjacent said straight handle portion and leading to an electrically insulating fulcrum at which said levers cross, and beyond said fulcrum at the other end of each lever a welding tip (11) the distance from the welding tip of each lever to the fulcrum being less than half the total length of each lever, replaceable electrode means (10) provided on the tips (11) of said lever means (9), high precision adjusting means (16, 17, 18) placed between the handle portions of said lever means (9), one of said lever means (9) including a leaf spring (12), to give to said one lever means (9) some flexibility and provided between said adjusting means (16, 17, 18) and said fulcrum device (13), said leaf spring (12) being coated with flexible cord conductive means (14) such as to restore the electrical conductivity section of the arm of said one of said lever means (9), and means (19) for the rapid engagement of the cables from the welding machine.

6. A device according to claim 5 wherein said lever means (9) as well as said leaf spring (12) are made up of a Cu—Be alloy which has been surface-treated by a thickening chromium plating process.

7. Device according to claim 5 wherein said welding gun (7) is surface treated with a material suited to withstand the sterilization in an autoclave.

8. A device according to claim 5 wherein said flexible cord conductive means (14) are made up of flexible copper.

9. A device according to claim 5 wherein the two electrode-holding tips (10) of said two lever means (9) are at a slope of value between 0° and 360° with respect to the main plane of the welding gun.

10. A device according to claim 8 wherein said electrode-holding tips (10) of said two lever means (9) are at a slope of value between 90° and 120° with respect to the main plane of the welding gun.

11. A device according to claim 5, wherein said electrodes are made up of elconite.

12. A device according to claim 5 wherein said high precision adjusting means (16, 17, 18) are provided at any position along the straight handle sections of said levers· between said means for the rapid engagement of the cables and the zone where said lever means bend to cross in said fulcrum device.

**Patentansprüche**

1. Elektrische Schweissvorrichtung zum Feinschweissen auf dem orthopaedischen und zahnaertlichen Gebiet oder zur anderen chirurgischen Anwendungen, welche interdentale Feinschweisspistole-Mittel (7) in Form von zwei aneinander scherenartig angelenkten Hebeln, mit der Moeglichkeit der Einstellung der miteinander zu schweissenden Stuecken und ein elektronisches Kapazitiventladung-Schweissgeraet mit Schweisszeitgebermitteln und Steuertafelmitteln enthaelt, dadurch gekennzeichnet, dass folgende Mittel vorgesehen sind:

—Akkumulator- oder Akkumulatorenbatteriemittel (8);

—eine elektrische Einheit (4) zur Ladungseinstellung und Spannungswandlung;

—eine Kondensatoren-Gruppe (5);

—elektronische Umschaltung-Mittel (6), verbunden mit ger genannten Schweisspistole;

—Programmierung- und Datenspeicherung-Mittel (1) zur Steuerung der fuer die genannte Kondensatoren-Gruppe notwendigen Ladung;

—logische Schaltzeitgabersteuerung-Mittel (2) wobei die Steuertaffelmittel mit den genannten Programmierung- und Datenspeicherung- Mitteln (1) sowie mit den genannten logischen Schaltzeitgeber steuerung-Mittel (2) verbunden sind und die genannten Akkumulatormittel (8) Gleichstrom an die genante Ladungseinstellungs- und Spannungsumwandlungseinheit (4) liefert, deren Eingang mit den genannten logischen Schaltzeitgebersteuerungsmitteln (2) und mit den genannten Programmierung- und Datenspeicherung-Mitteln (1) und deren Ausgang mit der genannten Kondensatoren-Gruppe (5) verbunden ist, um ueber eine zur Schweissung mit der genannten durch die genannten Umschaltungsmitteln (6) verbundenen Schweisspistole-Mitteln (7) notwendige Leistung zu verfuegen, wobei die Umschaltungsmittel (6) durch Verbindung mit den genannten logischen Schaltzeitgebersteuerungsmittel (2) gesteuert werden und das gewuenschte Programm am genannten Steuertaffel ausgewaehlt wird.

2. Elektrische Schweissvorrichtung nach Anspruch 1, dadurch gekennzeichnet, dass die Hochfrequenz-Umformer der Umschalterat (bekannt als Switch Mode Power Supply) als eine elektronische Einheit zur Ladungseinstellung und Spannungsumwandlung enthaelt.

3. Elektrische Schweissvorrichtung nach Anspruch 1, dadurch gekennzeichnet, dass die ein Datenspeicherung- Digitalsystem (1) (RAM, ROM, EAROM u.s.w.) als Speicherungsmittel und einen Analog/Digital-Umformer als Programmierungsmittel enthaelt.

4. Elektrische Schweissvorrichtung nach Anspruch 1, dadurch gekennzeichnet, dass die elektromechanische und analog-integrierte Umschalter als elektronische Umschaltungsmittel enthaelt.

5. Elektrische Feinschweissvorrichtung nach einem der vorhergekenden Ansprueche, dadurch gekennzeichnet, dass die genannten Schweisspistole-Mittel (7) zwei elektrisch leitende Hebel-Mittel (9) aufweisen, von denen jedes an einem der beiden Enden einen geraden Handgriffteil und einen am Handgriffteil anliegenden gekruemmten Teil hat, der zu einem elektrisch isolierten Schwenkpunkt, in dem die genannten Hebel sich kreuzen fuehrt und am anderen Ende jedes Hebels eine Schweissspitze (11) vorgesehen ist, deren Abstand vom Schwenkpunkt kleiner als die Haelfte der ganzen Laenge jedes Hebels ist und dass auswechselbare Elektrode-Mittel (10) an den Spitzen (11) der genannten Hebel-Mittel (9) und Feineinstellungsmittel (16, 17, 18) zwischen den Handgriffteilen der genannten Hebel-Mittel (9) angeordnet sind, wobei eines der genannten Hebel-Mittel (9) mit einer, zwischen den genannten Einstellungsmittel (16, 17, 18) und dem genannten Sohwenkpunkt (13) angeordneten Blattfeder (12) ausgestattet ist, die mit biegbaren elektrisch leitenden Faden-Mitteln (14) bekleidet ist, um so die elektrische Leitfaehigkeit des Armes eines der genannten Hebel-Mittel (9) herzustellen, und dass Mittel (19) zur schnellen Anschaltung von Kabeln der Schweissvorrichtung vorgesehen sind.

6. Vorrichtung nach Anspruch 5, bei der die genannten Hebel-Mittel (9) und Blattfeder (12) aus einer Cu—Be Legierung bestehen, deren Oberflaeche mit einem Chrom-Plattierungsverfahren behandelt wurde.

7. Vorrichtung nach Anspruch 5, bei der die Oberflaeche der genannten Schweisspistole (7) mit einem Material behandelt wird, das gegen die Steriliesation im Autoklav bestaendig ist.

8. Vorrichtung nach Anspruch 5, bei dem die genannten biegbaren, elektrisch leitenden Faden-Mittel (14) aus biegbarem Kupfer bestehen.

9. Vorrichtung nach Anspruch 5, bei dem die beiden Elektrodenhaltenden Spitzen (10) der genannten zwei Hebel-Mittel (9) gegenueber der Hauptebene der Schweisspistole um 0 bis 360° geneigt sind.

10. Vorrichtung nach Anspruch 8, bei der die genannten elektrodehaltenden Spitzen (10) der genannten Hebel-Mittel (9) gegenueber der Hauptebene der Schweisspistole um 90 bis 120° geneigt sind.

11. Vorrichtung nach Anspruch 5, bei der die genannten Elektroden aus Elconite bestehen.

12. Vorrichtung nach Anspruch 5, bei der die genannten Feineinstellung-Mittel (16, 17, 18) an irgendwelchen Handgriffstellen der genannten Hebel zwischen den genannten Mitteln zur schnellen Anschaltung von Kabeln und der Zone, in der die genannten Hebel-Mittel sich am Schwenkpunkt kreuzen, angeordnet sind.

**Revendications**

1. Dispositif électrique de soudure à précision pour opérations de soudure dans le domaine de l'odontologie ou de l'orthopédie ou des autres applications chirurgicales, comprenant des moyens à pistolet de soudure interdentale à précision (7) en forme de deux leviers articulés entre eux en forme de ciseaux, avec la possibilité de régler la pression sur les éléments à souder et une machine de soudure électronique à décharge capacitive ayant des moyens temporisateurs et des moyens à tableau de commande, caractérisé en ce qu'il comprend des moyens suivants:
—accumulateur ou moyens d'alimentation à accumulateur (8);
—une unité de reéglage de charge électronique et de conversion de voltage (4);
—un groupe des condensateurs (5);
—moyens de commutation électronique (6) units à ledit pistolet de soudure;
—moyens de programmation et de rassemblement des données (1) pour contrôler la charge qui est nécessaire pour ledit groupe de condensateurs électroniques;
—moyens logiques et temporisateurs (2) et les moyens à tableau de commande (3) étant units avec lesdits moyens de programmation et de rassemblement des données (1) ainsi qu'avec lesdits moyens logiques et temporisateurs (2), dans lesquels le courant continu est alimenté par lesdits moyens à accumulateur (8) à ladite unité de réglage de charge électronique et de conversion de voltage (4) dont d'entrée est unie avec lesdits moyens logiques et temporisateurs (2) et avec lesdits moyens de programmation et de rassemblement des données (1) et dont la sortie est unie avec ledit groupe de condensateurs (5) afin de disposer de puissance nécessaire pour l'operation de soudure par lesdits moyens à pistolet de soudure (7) unies au moyen des dits moyens de commutation (6) controllés par connexion avec lesdits moyens logiques et temporisateurs (2) le programme étant selectionné sur le tableau de commande.

2. Dispositif électrique de soudure selon la revendication 1, caractérisé en ce qu'il comprend des convertisseurs de haute fréquence du genre à commutation (dits Switch Mode Power Supply) comme l'unité de réglage de charge et de conversion de voltage.

3. Dispositif électronique de soudure selon la revendication 1, caractérisé en ce qu'il comprend un système de rassemblement des données digitales (1) (RAM, ROM, EAROM) comme moyens de rassemblement des données et un convertisseur analogue/digital comme moyens de programmation.

4. Dispositif électronique de soudure selon la revendication 1, caractérisé en ce qu'il comprend des commutateurs électromécaniques et analogues intégrés.

5. Dispositif électrique de soudure à précision selon une des revendications précedentes, caractérisé en ce que lesdits moyens à pistolet de soudure comprenent deux moyens à leviers conducteurs (9), chacun ayant une portie droite servant de manche et s'étendant jusqu'à une entablure d'isolation électrique, dans laquelle lesdits leviers se croisent, et après ladite entablure à l'autre bout de chaque levier une portion de soudure (11), la distance entre la portion de soudure e chaque levier et l'entablure étant plus courte que la moitié de la longueur totale de chaque levier, des moyens à électrodes rechangeables (10) placés sur les portions de soudure (11) des dits moyens à levier (9), moyens de regulation à haute précision (16, 17, 18) placés entre les parties du manche des dits moyens à levier (9), une des dits moyens à levier (9) comprenant un ressort à lame (12), pour donner à un des dits moyens à levier (9) une certaine flexibilité, placé entre lesdits moyens de réglage (16, 17, 18) et ladite entablure (13), ledit ressort à lame étant recouvert de moyens conductibles à corde flexible (14) pour rétablir la section de conductivité électrique du bras d'un des dits moyens à levier (9), et moyens (19) pour l'engagement rapide des cables de la machine de soudure.

6. Dispositif selon la revendication 5, dans lequel ledits moyens à levier (9) ainsi que ledit ressort à lame sont composes d'un alliage de Cu—Be, dont la surface a été traitée par un procédé de plaquage au chrome d'épaississement.

7. Dispositif selon la revendication 5, dans lequel la surface du dit pistolet de soudure (7) est traitée avec un materiel apte à résister à la sterilisation dans un autoclave.

8. Dispositif selon la revendication 5, dans lequel ledits moyens conductibles à corde flexible (14) sont faits en cuivre flexible.

9. Dispositif selon la revendication 5, dans lequel lesdites portions porte-électrodes (10) des dits deux moyens à levier (9) sont inclinés à un angle entre 0° et 360° par rapport au plan principal du pistolet de soudure.

10. Dispositif selon la revendication 8, dans lequel lesdits portion port-électrodes (10) des dits deux moyens à levier (9) sont inclinés à un angle entre 9 et 120° par rapport au plan principal du pistolet de soudure.

11. Dispositif selon la revendication 5, dans lequel lesdits électrodes sont faits en elconite.

12. Dispositif selon la revendication 5, dans lequel lesdits moyens de régulation d'une haute précision (16, 17, 18) sont placés en une position quelconque le long des parties droites du manche des dits leviers entre les moyens pour l'engagement rapide des cables et la zone ou lesdits leviers s'incurvent pour se croiser en ledit dispositif à entablure.

| BATTERIES GROUP | → | CHARGE REGULATION AND VOLTAGE CONVERSION ELECTRONIC UNIT | → | ELECTRIC CONDENSER BENCH UNIT | → | ELECTRONIC SWITCH UNIT | WELDING GUN |

CONTROL BOARDS

CHARGE CONTROL AND DATA STORAGE PROGRAMMABLE CIRCUIT

CONTROL LOGIC AND TIMING UNIT

*Fig. 1*

EP 0 218 589 B1

*fig. 2*

RESET

START

EP 0 218 589 B1

*Fig. 2A'*

*Fig. 2A"*

*Fig. 2A'''*

Fig. 2B

EP 0 218 589 B1

*Fig. 3*

EP 0 218 589 B1

Fig. 4